Europäisches Patentamt

European Patent Office

Office européen des brevets

(11) Veröffentlichungsnummer: **0 309 387 B1**

# EUROPÄISCHE PATENTSCHRIFT

(45) Veröffentlichungstag der Patentschrift:
24.04.91 Patentblatt 91/17

(51) Int. Cl.⁵: **C10J 3/02, C10J 3/58,** C10B 31/08

(21) Anmeldenummer: 88730213.1

(22) Anmeldetag: 14.09.88

(54) **Verfahren und Vorrichtung zum Erzeugen von Generatorgas und aktivierter Kohle aus festen Brennstoffen.**

(30) Priorität: 25.09.87 DE 3732867

(43) Veröffentlichungstag der Anmeldung:
29.03.89 Patentblatt 89/13

(45) Bekanntmachung des Hinweises auf die Patenterteilung:
24.04.91 Patentblatt 91/17

(84) Benannte Vertragsstaaten:
AT BE CH FR GB IT LI LU NL SE

(56) Entgegenhaltungen:
WO-A-81/00112
DE-A- 3 335 544
DE-A- 3 509 263
GB-A- 2 169 310

(73) Patentinhaber: Michel-Kim, Herwig
Bamberger Strasse 41
W-1000 Berlin 30 (DE)

(72) Erfinder: Michel-Kim, Herwig
Bamberger Strasse 41
W-1000 Berlin 30 (DE)

(74) Vertreter: Pfenning, Meinig & Partner
Kurfürstendamm 170
W-1000 Berlin 15 (DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Erzeugen von Generatorgas und aktivierter Kohle aus festen Brennstoffen nach dem Oberbegriff des Hauptanspruchs und eine Vorrichtung zur Durchführung des Verfahrens.

Aus der DE-OS 33 35 544 ist eine Reaktorvorrichtung zur Erzeugung von Schwachgas bzw. Generatorgas aus Biomassen oder anderen verschwelbaren Abfallprodukten bekannt, die einen Primärvergaser und einen nachgeschalteten Sekundärvergaser aufweist, denen jeweils Luft zugeführt wird, wobei zwischen dem Primärvergaser und dem Sekundärvergaser ein Flugstrom-Gaswandler vorgesehen ist, in dem eine Zwischenvergasung stattfindet. Der Brennstoff wird mittels einer Unterschubbeschickung proportional zugeführt und die Vergasungsluft wird durch eine Ringdüse oder eine mittige Düse rotationssymmetrisch eingeführt. Es ist eine weitgehende Wärmerückführung von heißen austretenden Generatorgasen auf die Vergasungsluft sowie die Vorerwärmung des Brennstoffs vorgesehen.

Es hat sich gezeigt, daß sich mit dieser bekannten Vorrichtung unterschiedliche Brennstoffe auch mit hohem Wassergehalt umweltfreundlich mit relativ hohen Wirkungsgraden vergasen lassen, wobei auch die Abwasserprobleme hinsichtlich der Teer- und Phenolgehalte gelöst wurden. Es hat sich aber auch gezeigt, daß bei dieser bekannten Vorrichtung die Gefahr der Verkrustung der Kohle unter dem vorhandenen Füllstandssieb im Primärreaktor besteht. Die bekannte Vorrichtung wurde sowohl bei kleinen als auch bei größeren Anlagen verwendet, wobei sich gezeigt hat, daß Intabilitäten im Primärreaktor auftraten. Die Durchströmung mit Luft kann nach einigen Betriebsstunden einseitig werden und zu Kanälen mit nachfolgender Schlackebildung führen. Abhängig von der Brennstoffkörnung und der spezifischen Leistungen des Betriebes enthält des Generatorgas in der Primärstufe zu viel Flugkohle, die den Koksreaktor ausgebildeten Sekundärreaktor zusetzt. Dadurch schwanken die Druckverluste erheblich und sehr viel Brennstoff muß in Form von Feinkohle aus dem Sekundärreaktor ausgetragen werden, ohne daß diese Feinkohle sinnvoll weiterverwendbar ist. Gleichzeitig ist der Verbrauch von Koks im Sekundärreaktor schwankend und kann in ungünstigen Betriebsständen hohe Kosten verursachen. Bei dem bekannten Sekundärreaktor kann nur grobkörniger, verhältnismäßig harter aber zugleich reaktiver Koks eingesetzt werden.

Die deutsche Patentschrift 50 137 beschreibt einen Gasgenerator mit einem Brennraum, dem von oben her frisches Brennmaterial zugeführt wird. Auf einer unter dem Brennraum vorgesehenen Sohlenplatte liegt unter der frischen Brennmaterialschicht eine Aschenschicht. Die Sohlenplatte kann über eine Kurbel in Drehung versetzt werden, wodurch die Asche über den Rand der Sohlenplatte in einen Aschenraum fällt. Luft und/oder Dampf wird durch die Sohlenplatte hindurch in den Brennraum geleitet.

Der Erfindung liegt die Aufgabe zugrunde, ein Verfahren und eine Vorrichtung zum Erzeugen von Generatorgas und aktivierter Kohlen aus festen Brennstoffen zu schaffen, deren Betriebsbedingungen unabhängig von der Größe der Vorrichtung konstant sind und durch die eine schnelle Regelung der einzelnen Betriebsgrößen ermöglicht wird, wobei ein Generatorgas mit großer Reinheit erzeugt und ein guter Wirkungsgrad erzielt werden soll.

Diese Aufgabe wird erfindungsgemäß durch die kennzeichnenden Merkmale des Verfahrensanspruchs 1 und des Vorrichtungsanspruchs 8 gelöst. Durch die Vorsehung des Drehbodens in der ersten Vergasungsstufe und der Vorkammer, in der ein Teil des Brennstoffs zur Reduzierung des Sauerstoffgehaltes der Vergasungsluft verbrannt wird, wird der Brennstoff in der ersten Vergasungsstufe gut verteilt und es können sich keine Kanäle und keine Schlacken bilden. Dies gilt sowohl bei kleinen als auch bei großen Reaktoren, so daß die Betriebsbedingungen unabhängig von der Größe der Anlage sind. Durch die zirkulierende Rückführung der Flugkohle im Zwischenvergasungsbereich wird die Verweilzeit der Flugkohle stark erhöht, wodurch der Reduktionsprozeß in der Zwischenvergasung verbessert wird. Die Austrittstemperaturen der Gase aus dem Zwischenvergasungsbereich werden infolge des endothermen Reduktionsprozesses erniedrigt, wobei gleichzeitig der Heizwert des Gases erhöht wird. Durch die geregelte zirkulierende Flugkohlenrückführung kann gezielt Aktivkohle erzeugt werden.

Durch die in den Unteransprüchen angegebenen Maßnahmen sind vorteilhafte Weiterbildungen und Verbesserungen möglich.

Dadurch, daß die Füllstandsmessung mit einem axial verschiebbaren, sich drehenden Füllstandsrotor mit Anstellflächen (ähnlich einem Propeller) erfolgt, wird verhindert, daß die Füllstandsvorrichtung in das oft feinkörnige Kohlenbett der ersten Vergasungsstufe einsinkt. Dies ist darauf zurückzuführen, daß die Blätter des Füllstandsrotors infolge der Drehung und des Anstellwinkels einen Auftrieb erhalten. Gleichzeitig werden Anbackungen von Kohle verhindert.

Ausführungsbeispiele der Erfindung sind in den Zeichnungen dargestellt und werden in der nachfolgenden Beschreibung näher erläutert.

Es zeigen :

Fig. 1 einen Schnitt durch ein Ausführungsbeispiel der vorliegenden Erfindung mit allen drei Vergasungsstufen,

Fig. 2 einen Schnitt in vergrößerter Darstellung durch die erste und zweite Vergasungsstufe,

Fig. 3 eine Aufsicht auf den Drehboden der ersten Vergasungsstufe mit Leitblechen für die Brennstoffverteilung sowie Drehsektoren der Vorkammer,

Fig. 4 eine Aufsicht auf den Drehschieber der zweiten Vergasungsstufe mit Leitblechen für die Führung der Flugkohle, und

Fig. 5 einen Schnitt durch die dritte Vergasungsstufe.

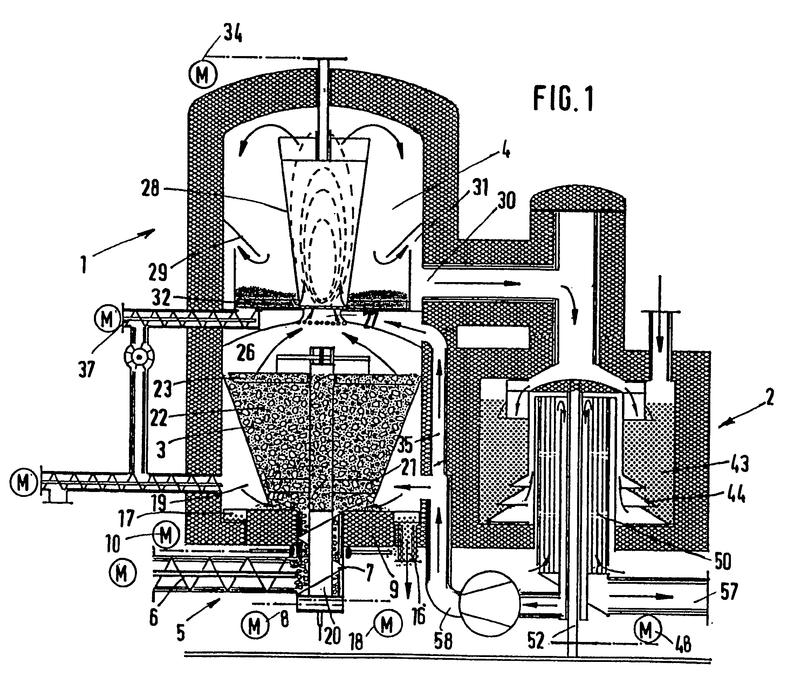

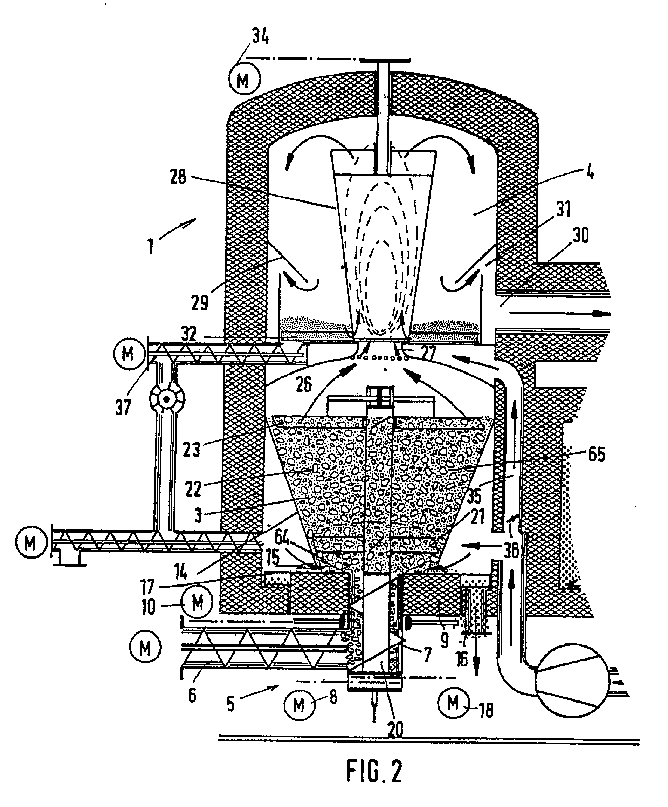

Die Vorrichtung gemäß Fig. 1 weist einen ersten Reaktor 1 und einen zweiten Reaktor 2 auf, die im dargestellten Beispiel räumlich getrennt voneinander angeordnet sind. Der erste Reaktor 1, der in vergrößerter Darstellung in Fig. 2 gezeigt ist und mit einer ersten Vergasungsstufe 3 und einer einen Zwischenvergasungsbereich 4 bildenden zweiten Vergasungsstufe versehen ist, weist eine Unterschubbeschickung 5 auf, die aus einer Dosierschnecke 5, einer senkrechten Förderschnecke 7 und einem drehzahlgeregelten Antrieb 8 besteht. Der Boden des ersten Reaktors 1 ist als Drehboden 9 ausgebildet, der von einem mit einer Drehzahlregelung versehenen Antrieb 10 gedreht wird. Auf dem Drehboden 9 sind Leitschaufeln 11 angeordnet, die den Brennstoff bevorzugt nach außen und dann nach oben fördern.

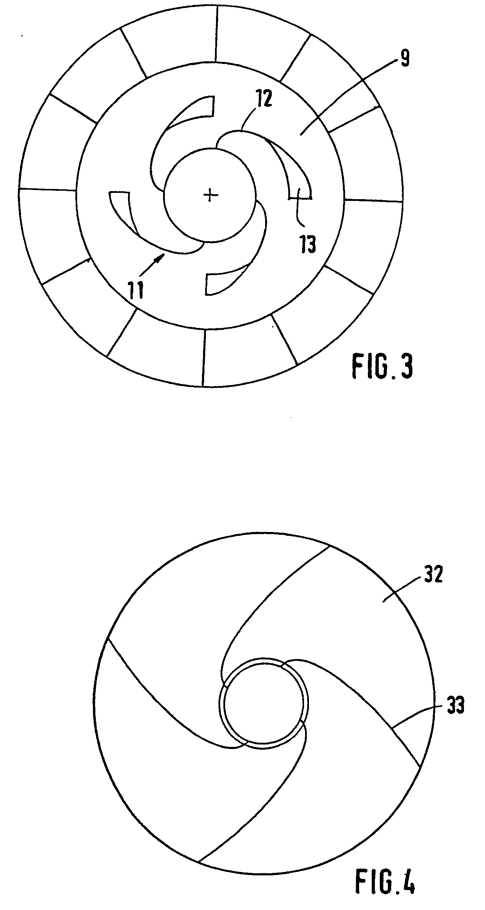

Fig. 4 zeigt ein Ausführungsbeispiel des Drehbodens 9 mit Leitschaufeln 11, die für die Förderung nach außen als Spiralbleche 12 und für die Förderung nach oben als angewinkelte radial angeordnete Bleche 13 ausgebildet sind, wobei letztere an den Enden der Leitschaufeln 11 liegen.

In der ersten Vergasungsstufe 3 wird der Brennstoff in einem oben und unten offenen Gefäß 14 aufgenommen, das trichterförmig ausgebildet sein kann, wobei zwischen Drehboden 9 und unterem Ende des Gefäßes 14 ein Luftspalt 15 vorgesehen ist. Der Luftspalt 15 stellt eine Verbindung zwischen dem Inneren des Gefäßes 14 und einer Vorkammer 19 im unteren Bereich des ersten Reaktors 1 zwischen seiner Wandung und dem Gefäß 14 her, in dem eine Vorverbrennung eines Teilstroms des Brennstoffs stattfindet. In der Vorkammer 19 sind in der Nähe des Bodens des ersten Reaktors 1 Drehsektoren 17 (Fig. 4) angeordnet, die sich zusammen mit dem Drehboden 9 drehen und den vorverbrannten Brennstoff zu einem Fallrohr 16 befördern. Eine über einen Antrieb 18 drehbare Welle 20 ragt durch die senkrechte Förderschnecke 7 hindurch in das Innere des ersten Reaktors 1 hinein, auf der innerhalb des Gefäßes 14 Rührblätter 21 sitzen, die nach oben angestellt sind.

Das Brennstoffbett 22 im Gefäß 14 wird von einem schwimmenden, axial verschiebbaren rotationssymmetrischen Füllstandsrotor 23 abgedeckt, der die Brennstoffhöhe abtastet und mit einem nicht dargestellten Regelkreis verbunden ist. Zur Vermeidung von Verkrustungen und Anbackungen wird der Füllstandsrotor 23 gedreht, wobei er über die Welle 20 angetrieben wird. Der Füllstandsrotor 23 ist mit Anstellblechen (nicht dargestellt) versehen, die ihm infolge der Drehung einen Auftrieb verleihen und dadurch das Einsinken in die stark fließfähige Feinkohle vermeiden. Die Drehzahl des Füllstandsrotors 23 wird abhängig von der Brennstoffkörnung und dem Gasdurchsatz so geregelt, daß entweder nur so viel Flugkohle austritt wie in der Zwischenvergasung gebracht wird oder eine für die Erzeugung von Aktivkohle als Koppelprodukt optimale Menge.

Die als Zwischenvergasungsbereich ausgebildete zweite Vergasungsstufe 4 weist eine Brennzone 26 auf, die sich in einer Venturidüse 27 mit Diffusor 28 fortsetzt. Etwa in der mittleren Höhe des Diffusors 28 ist an der Außenwand der zweiten Vergasungsstufe 4 ein Fliehkraftabscheider 29 angeordnet und eine Heißgasleitung 30 führt von dem vom Fliehkraftabscheider 29 abgeschirmten Bereich 31 in den zweiten Reaktor 2.

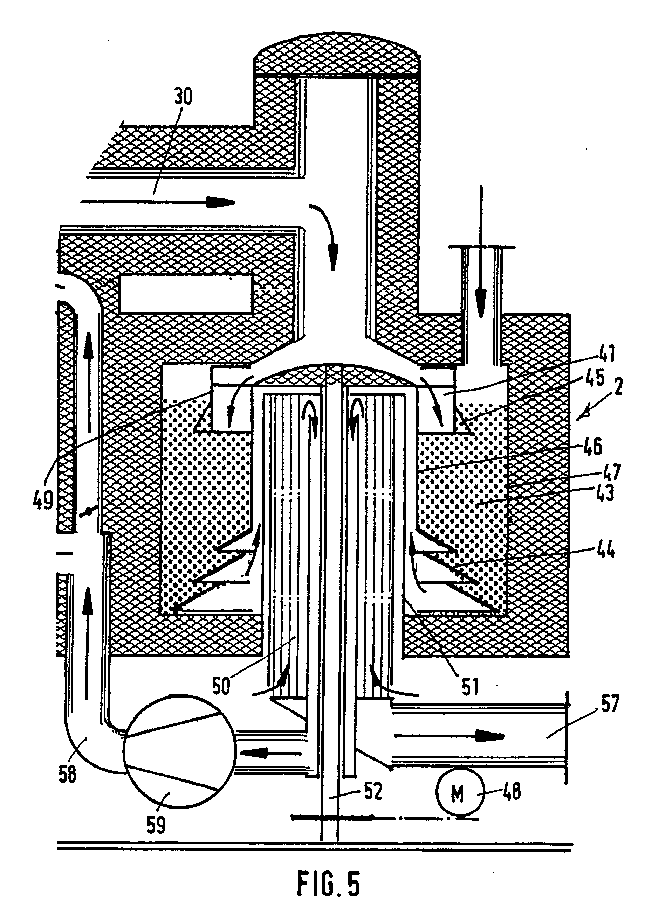

Der Boden des Zwischenvergasungsbereiches 4 in der Höhe der Kehle der Venturidüse ist als von außen angetriebener Drehschieber 32 ausgebildet, der näher in Fig. 5 dargestellt ist. Dieser Drehschieber 32 ist mit gekrümmten Leitblechen 33 versehen, wodurch die Flugkohle bei Drehung in der einen Drehrichtung nach innen zur Kehle der Venturidüse 27 und bei der entgegengesetzten Drehrichtung nach außen geführt wird. Unterhalb des äußeren Randbereichs des Drehschiebers 32 ist eine Austragschnecke 37 vorgesehen, die die anfallende Flugkohle nach außen fördert. Der Drehschieber 32 wird von oben über einen Motor 34 angetrieben, wobei der Diffusor 28 mitgedreht wird.

Die Luft für den Zwischenvergasungsbereich 4 ist ebenfalls vorerwärmt und gelangt über einen Kanal 35 in den Bereich der Brennzone 26 und der Venturidüse 27. Über eine Drossel 38 wird die Luftmenge abhängig von der Temperatur im Diffusor 28 geregelt.

Der erste Reaktor 1 ist über die Heißgasleitung 30 mit dem als Koksvergaser ausgebildeten zweiten Reaktor 2 (Fig. 5) verbunden, der ein glühendes Koksbett 43 enthält. Das Koksbett 43 liegt auf einem drehbaren rotationssymmetrischen Treppenrost 44 auf. Dieser Treppenrost 44 ermöglicht den Einsatz von feinem Koks oder feiner Holzkohle, da dieser nicht durch die Roststäbe fallen kann. Der Treppenrost 44 geht nach oben hin in einen Mantel 46 mit relativ großem Durchmesser über, der ungefähr 30 % bis 50 % des Durchmessers der Reaktorwandung 47 beträgt. Im oberen Bereich ist an dem Mantel 46 ein Ringkanal 41 vorgesehen, in den die mittig über dem Koksbett 43 und dem Treppenrost angeordnete Heißgasleitung 30 mündet. Der Außenmantel 45 des Ringkanals 41 ist fest mit dem Mantel 46 verbunden, so daß er sich mit diesem dreht, wobei er mit Mitnehmern 45 zur Verteilung des Koks versehen ist.

Innerhalb des Mantels 46 des Treppenrostes 44 ist feststehend ein Gas-Luft-Rohrbündelwärmetauscher 50 angeordnet, an den eine Heißgasleitung 57 angeschlossen ist, die zur Wäsche führt. Zur Verhinderung des Verstopfens des Rohrwärmetauschers 50 ist zwischen ihm und dem Mantel 46 ein feststehendes Sieb 51 vorgesehen. Mittig durch den Wärmetauscher ist eine mit dem Mantel 46 verbundene Welle 52 geführt, die von einem Antrieb 48 in Drehung versetzt wird.

Zur Zuführung von Luft in den ersten Reaktor 1 für die Vergasung ist eine Luftleitung 58 zwischen dem zweiten Reaktor 2 und dem ersten Reaktor 1 vorgesehen, die in die Vorkammer 19 und in den Kanal 35 zur zweiten Vergasungsstufe mündet. Die Vergasungsluft wird von einem Gebläse 59 mit Drehzahlregelung durch den Wärmetauscher 50 in die Luftleitung 58 gesaugt bzw. gedrückt, wobei die Drehzahl so geregelt wird, daß die Druckdifferenz der vorerhitzten Vergasungsluft in der Vorkammer 19 und dem Außendruck Null ist.

Die Verfahrensweise der beschriebenen Vorrichtung ist wie folgt. Über die horizontale Dosierschnecke 6 und die synchron mit der Dosierschnecke 6 angetriebene vertikale Förderschnecke 7 wird der Brennstoff aus einem Dosiersilo gefördert und tritt rotationssymmetrisch in die erste Vergasungsstufe 3 ein. Die Brennstoffbeschickung wird mit Hilfe einer Kaskadenregelung aus dem Gasdurchsatz und der Füllstandshöhe in der ersten Vergasungsstufe 3 und-/oder aus dem Gasdurchsatz und/oder der Austrittstemperatur des Gases aus der ersten Vergasungsstufe 3 und/oder dem Gemischheizwert des Gases in der zweiten Vergasungsstufe 4 geregelt. Leitgröße ist der Gasdurchsatz, der mit einem geeigneten Sensor abgetastet wird, wobei der Sensor ein elektrisches Signal abgibt, das den nicht dargestellten Regelkreis des Füllstandsrotors 23, zum Beispiel ein im Regelkreis enthaltenes Potentiometer ansteuert. Eine andere Möglichkeit für die Regelung der Brennstoffbeschickung liegt in der Verknüpfung des Gasdurchsatzsignals mit einem die Temperatur des aus dem Primärvergasungsbereich austretenden Gases angebenden Signal über einen Kaskaden-PID-Regler. Durch diese Regelung wird eine konstante Brennstoffbeschickung bei Lastwechseln erzielt.

Die Leitschaufeln 11 des Drehbodens 9 fördern den Brennstoff radial nach außen und in der Nähe des Luftspaltes 15 nach oben. Dadurch werden Kanalbildungen und Schlackenbildungen in der unteren ersten Vergasungsstufe 3 innerhalb des Brennstoffs verhindert. Ein kleiner Teil des Brennstoffs wird durch den Drehboden 9 durch den Luftspalt 15 hindurch in die Vorkammer 19 geleitet, in der er mit der in dem Sekundärreaktor 2 beispielsweise auf 500°C über die Luftleitung 58 zugeführten vorerwärmten Luft verbrannt wird. Diese Vorkammerverbrennung hat den Zweck, den Sauerstoffgehalt der Vergasungsluft abzusetzen, vorzugsweise um 20% bis 25% und damit die Gefahr der Schlackenbildung in der ersten Vergasungsstufe 3 zu bannen. Dabei wird die Drehzahl des Drehbodens 9 so geregelt, daß bis etwa 15%, im Regelfall bis 5% des Brennstoffs in die Vorkammer 19 gelangen. Durch den Drehboden 9 wird außerdem der Luftspalt 15 symmetrisch freigehalten und Asche und gegebenenfalls Steine werden in die Vorkammer 19 ausgetragen und mit Hilfe der Drehsektoren 17 zum Fallrohr 16 befördert.

Die vorerhitzte Vergasungsluft, deren Sauerstoffgehalt bereits durch die Vorverbrennung in der Vorkammer 19 reduziert ist, tritt durch den Luftspalt 15 in den frischen Brennstoff ein und bildet die Oxidationszone 64 der Vergasung. In dieser Oxidationszone mit Temperaturen um 850°C werden die meisten bei der Verbrennung freiwerdenden Schwelgase verbrannt. Es verbleibt eine Holzkohle oder Torf- oder Braunkohlenkoks, der durch den nachkommenden Brennstoff nach oben in die Reaktionszone 65 gedrückt wird, wobei die Rührblätter 21 die Förderung unterstützen und gleichzeitig das Bett egalisieren. Dort steht die glühende Holzkohle oder dergleichen für den Reduktionsprozeß zur Verfügung. Durch diesen im Gleichstrom von Brennstoff und Verbrennungsluft geführten Vergasungsprozeß mit einer Vorkammerverbrennung entsteht bereits in der ersten Vergasungsstufe 3 ein Generatorgas mit Teer- und Phenolgehalten weit unter 1%. Der Wasserstoffgehalt des Gases liegt bei holzartigen Brennstoffen im Regelfall über 15%.

Dieses Gas wird in dem Zwischenvergasungsbereich 4 einem Crackprozeß unterzogen, um nahezu alle höher molekularen Kohlenwasserstoffe zu spalten. Diesem Crackprozeß kommen die hohen Wasserstoffgehalte zugute. Beim Eintritt des Gases aus der ersten Vergasungsstufe 3 in die Brennzone 26 des Zwischenvergasungsbereiches 4 wird es mit der durch den Kanal 35 strömenden Luft, deren Menge abhängig von der Temperatur im Diffusor 28 geregelt wird, teilweise verbrannt. Die Cracktemperatur liegt im Regelfall in der Größenordnung von 900°C, doch in Sonderfällen, beispielsweise bei der Vergasung von Sondermüll, müssen auch höhere Temperaturen eingestellt werden.

Die Verbrennung erfolgt zunächst in der Venturidüse 27 und dem nachgeschalteten Diffusor 28, wobei das Gas gut verwirbelt wird. In der Kehle der Venturidüse 27 wird ein Unterdruck erzeugt, der eine Ansaugung von der Seite ermöglicht. Am oberen Ende des Diffursors 28 wird das Gas um etwa 180° umgelenkt und nach unten geführt. Nach etwa der Hälfte der Zwischenvergasung wird ein großer Teil des Gases an dem Fliehkraftabscheider 29 erneut um 180° nach außen umgelenkt, wobei die Flugkohle mit Korngrößen über 0,1 mm abgetrennt wird und über die Gasleitung 30 abgesaugt und in den zweiten Reaktor 2 geleitet wird.

Die abgetrennte Flugkohle fällt auf den Drehschieber 32 am Boden des Zwischenvergasungsbereiches 4 und wird je nach Drehrichtung durch die Leitbleche 33 zu der Austragungsschnecke 37 gefördert oder nach innen in die Kehle der Venturidüse 27 zurückgeführt, wo sie durch den Unterdruck angesaugt wird. Durch diese Abscheidung und Rückführung der Flugkohle wird im Zwischenvergasungsbereich 4 eine Anreicherung der Flugkohle aus der ersten Vergasungsstufe 3 erzielt und die Verweilzeit der Flugkohle wird wesentlich erhöht, wodurch aufgrund der Aufkonzentrierung der Flugkohle im Zwischenvergasungsbereich 4 der Reduktionsprozeß erheblich begünstigt wird. Die Austrittstemperaturen des Gases aus dem Zwischenvergasungsbereich werden infolge des endothermen Reduktionsprozesses erniedrigt, wodurch sich der Koksverbrauch in dem zweiten Reaktor 2 verringert.

Wenn der Austritt der Flugkohle aus der ersten Vergasungsstufe 3 so geregelt wird, daß er gerade dem Verbrauch an Kohle in dem Zwischenvergasungsbereich 4 entspricht, wird ein optimaler Ausbrand des Brennstoffes in der ersten Vergasungsstufe erreicht. Durch die geregelte Flugkohlerückführung in die Venturidüse 27 mit der regelbaren Verweilzeit in dem Zwischenvergasungsbereich 4 kann eine weitere Anwendung des Verfahrens erzielt werden, nämlich die gezielte Erzeugung hochwertiger, feinkörniger Aktivkohle, die durch eine Reduktion von Feinkohle in einer Wasserdampf- bzw. Kohlenstoff-Dioxidumgebung bei Temperaturen oberhalb 800°C entsteht.

In diesem Bereich wird die Austragung der Flugkohle aus der ersten Vergasungsstufe 3 durch eine Erhöhung der Drehzahl des Füllstandsrotors 23 über den stöchiometrischen Kohleverbrauch der Zwischenvergasung hinaus erhöht. Die Verweilzeit der Flugkohle in dem Zwischenvergasungsbereich 4 wird dann über die Austragungsgeschwindigkeit der Austragungsschnecke 37 geregelt. Durch die Entnahme der Aktivkohle aus einem Temperaturbereich bei etwa 700°C wird sichergestellt, daß die Kohle weitgehend frei von höher molekularen, oberflächlich angelagerten Kohlenwasserstoffen ist.

Um extern vorgegebene Kokse zu aktivieren oder Aktivkohle zu regenerieren, können diese Kohlen beispielsweise in den Zwischenvergasungsbereich eindosiert werden.

Das aus dem Zwischenvergasungsbereich austretende Gas ist weitgehend teerfrei, so daß das Wasch- und Kondensationswasser den Einleitungsbestimmungen der Abwasserwerke gerecht wird. Auf eine weitere Vergasungsstufe könnte prinzipiell verzichtet werden, sofern der Flugkohleanteil aus der Primärvergasung hoch genug ist. Aus Sicherheitsgründen, aber auch um die für die Reduktionsprozesse nutzbare fühlbare Wärme des Gases weitgehend zu nutzen, wird ein Koksgenerator nachgeschaltet, dessen glühendes Koksbett den Durchbruch von Teeren bei Betriebsstörungen verhindert.

Das Gas tritt aus dem Zwischenvergasungsbereich 4 über die Gasleitung 30 mit Temperaturen von 650° bis 800°C in den Ringkanal 41 des zweiten Reaktors 2 ein und strömt von dort durch das glühende Koksbett 43 im Gleichstrom mit dem Koks, der von oben her zugegeben wird. Das durch den Treppenrost 44 hindurchtretende Gas wird durch einen Ringkanal innerhalb des Mantels 46 nach oben und von dort durch die Rohre des in den Treppenrost 44 integrierten Wärmetauschers 50 nach unten geleitet und von dort über die Heißgasleitung 57 mit einer Temperatur von ungefähr 450°C zur Wäsche geführt. Die von dem Gas im Wärmetauscher 50 abgegebene Wärme wird zur Erhitzung der Vergasungsluft für den ersten Reaktor 1 genutzt, die von dem Gebläse 59 in den Wärmetauscher 50 gesaugt wird.

In der beschriebenen Ausführungsform ist es möglich, den ersten Reaktor modular aufzubauen, d.h., der obere Teil des ersten Reaktors kann abgehoben werden und die im unteren Bereich des ersten Reaktors 1 vorhandenen Teile können von oben her eingesetzt bzw. aufgesteckt werden. Auf diese Weise kann der Reaktor für unterschiedliche Betriebsbedingungen schnell umgerüstet werden bzw. Reparaturen vereinfacht werden.

**Ansprüche**

1. Verfahren zum Erzeugen von Generatorgas und aktivierter Kohle aus festen Brennstoffen, bei dem einer ersten Vergasungsstufe der Brennstoff durch Unterschubbeschickung und vorerwärmte Luft im Gleichstrom von Brennstoff und Luft zugeführt wird und bei dem in einer zweiten Vergasungsstufe unter Zufuhr von sekundärer Luft eine Zwischenvergasung stattfindet und anschließend in einer dritten Vergasungsstufe das Gas mit glühendem Koks bzw. Holzkohle umgesetzt wird, wobei die Wärme des austretenden Gases zur Erwärmung der Luft verwendet wird, **dadurch gekennzeichnet,** daß der in die erste Vergasungsstufe mittig eintretende Brennstoff von innen nach außen und dann nach oben geführt wird, daß ein Teil des eintretenden Brennstoffes in einer mit der Zuführung der vorerwärmten Luft in Verbindung stehenden Vorkammer zur Reduzierung des Sauerstoffgehaltes der vorerwärmten Luft vorverbrannt wird, daß das Gas in der Zwischenvergasung mit der zugemischten Luft durch eine Venturidüse mit Diffusor geleitet wird und daß die aus der ersten Vergasungsstufe mitgerissene Flugkohle zumindestens teilweise in die Kehle der Venturidüse zurückgeführt wird, wobei die Rückführung sowohl durch Unterdruck in der Venturidüse als auch mechanisch unterstützt wird.

2. Verfahren nach Anspruch 1, dadurch gekennzeichnet, daß die Brennstoffbeschickung stetig und abhängig von dem Gasdurchsatz und/oder der Füllstandshöhe des Brennstoffbettes in der ersten Vergasungsstufe und/oder der Austrittstemperatur des Gases aus der ersten Vergasungsstufe und/oder dem Gemischheizwert des Gases in der Zwischenvergasung geregelt wird.

3. Verfahren nach Anspruch 1 oder 2, dadurch gekennzeichnet, daß die Verteilung des Brennstoffs durch Drehung des Bodens der ersten Vergasungsstufe erfolgt und daß die Drehzahl des Bodens abhängig von der Brennstoffkörnung und der Brennstoffzufuhr in der Weise geregelt wird, daß bis etwa 15% des Brennstoffs in die Vorkammer geleitet wird.

4. Verfahren nach einem der Ansprüche 1 bis 3, dadurch gekennzeichnet, daß der Flugkohleaustrag aus der ersten Vergasungsstufe geregelt wird.

5. Verfahren nach einem der Ansprüche 1 bis 4, dadurch gekennzeichnet, daß der den Zwischenvergasungsbereich bildenden zweiten Vergasungsstufe vorerwärmte Luft zugeführt wird, wobei die Luftmenge abhängig von der Temperatur im Diffusor der Zwischenvergasung geregelt wird.

6. Verfahren nach einem der Ansprüche 1 bis 5, dadurch gekennzeichnet, daß die Flugkohlenmenge und die Verweilzeit der Flugkohle in der Zwischenvergasung durch eine Rückführung abgeschiedener Flugkohle und/oder separate Zugabe von Feinkohle geregelt wird.

7. Verfahren nach einem der Ansprüche 1 bis 6, dadurch gekennzeichnet, daß die Vergasungsluft für die erste und zweite Vergasungsstufe durch Nutzung der Abwärme des Gases hinter der dritten Vergasungsstufe erwärmt wird, und die Menge der vorerwärmten Vergasungsluft so geregelt wird, daß sie in der Kammer der ersten Vergasungsstufe den gleichen Luftdruck wie die Außenluft aufweist.

8. Verfahren nach einem der Ansprüche 1 bis 7, dadurch gekennzeichnet, daß die Flugkohle nach mehrfacher Rückführung in die Brennzone der Zwischenvergasung als aktivierte Kohle über eine Fördervorrichtung und Schleuse ausgetragen wird.

9. Reaktorvorrichtung zum Erzeugen von Generatorgas und aktivierter Kohle aus festen Brennstoffen mit drei Vergasungsstufen, wobei eine Unterschubbeschickung zur rotationssymmetrischen Zufuhr des Brennstoffs in den Boden der ersten Vergasungsstufe und eine Luftzuführung vorgesehen sind, **dadurch gekennzeichnet,** daß der Boden der ersten Vergasungsstufe (3) als Drehboden (9) ausgebildet ist und daß die den Zwischenvergasungsbereich (4) bildende zweite Vergasungsstufe eine Venturidüse (27) mit Diffusor (29) und einen Drehschieber (32) zur Rückführung von wenigstens einem Teil der Flugkohle in die kehle der Venturidüse (27) aufweist.

10. Vorrichtung nach Anspruch 8, dadurch gekennzeichnet, daß die erste Vergasungsstufe (3) und die zweite Vergasungsstufe (4) übereinander angeordnet sind und daß die dritte Vergasungsstufe als getrennter Reaktor (2) ausgebildet ist.

11. Vorrichtung nach Anspruch 8 oder 9, dadurch gekennzeichnet, daß die erste Vergasungsstufe (3) von einem oben und unten offenen Gefäß (14) begrenzt wird, das in einen Reaktor (1) eingesetzt ist und daß zwischen dem unteren Ende des Gefäßes (14) und dem Drehboden (9) ein Luftspalt (15) vorgesehen ist.

12. Vorrichtung nach Anspruch 10, dadurch gekennzeichnet, daß zwischen Gefäß (14) und Reaktorwand im Bereich der Luftzuführung (58) eine Vorkammer (19) zur Verbrennung eines kleinen Teils des zugeführten Brennstoffs vorgesehen ist.

13. Vorrichtung nach einem der Ansprüche 8 bis 11, dadurch gekennzeichnet, daß auf dem Drehboden (9) Leitbleche angebracht sind, die den Brennstoff abhängig von der Drehzahl zunächst nach außen und dann nach oben führen.

14. Vorrichtung nach Anspruch 11 oder 12, dadurch gekennzeichnet, daß die Vorkammer (19) mit Leitblechen in Sektoren geteilt ist, wobei sich die Leitbleche mit der Drehung des Drehbodens (9) mitdrehen.

15. Vorrichtung nach einem der Ansprüche 8 bis 13, dadurch gekennzeichnet, daß innerhalb der ersten Vergasungsstufe (3) eine Rührvorrichtung mit Rührblättern (21) zur Förderung und Verteilung des Brennstoffs vorgesehen ist.

16. Vorrichtung nach einem der Ansprüche 8 bis 14, dadurch gekennzeichnet, daß die erste Vergasungsstufe (3) mit einem auf dem Brennstoffbett schwimmend angeordneten, axial verschiebbaren Füllstandsrotor (23) versehen ist, der drehbar gelagert ist.

17. Vorrichtung nach Anspruch 13, dadurch gekennzeichnet, daß der Füllstandsrotor (23) Leitbleche mit Anstellwinkeln zur Erzeugung eines Auftriebes bei Drehbewegungen auf dem Brennstoffbett aufweist und abhängig vom Füllstand axial verschiebbar ist.

18. Vorrichtung nach Anspruch 15 oder 16, dadurch gekennzeichnet, daß die Regelung des Flugkohleaustrages aus der ersten Vergasungsstufe (3) abhängig von der Drehgeschwindigkeit des Füllstandsrotors (23) erfolgt.

19. Vorrichtung nach Anspruch 8, dadurch gekennzeichnet, daß der Drehschieber (32) in der zweiten Vergasungsstufe am Boden in Höhe der Kehle der Venturidüse (27) angeordnet ist.

20. Vorrichtung nach Anspruch 18, dadurch gekennzeichnet, daß der Drehschieber (32) nach hinten gekrümmte Leitbleche aufweist, die die Flugkohle bei der einen Drehrichtung nach innen und bei der entgegengesetzten Drehrichtung nach außen zu einer Entnahmevorrichtung führt.

21. Vorrichtung nach einem der Ansprüche 8 bis 19, dadurch gekennzeichnet, daß vor dem Gasaustritt (31, 30) im Zwischenvergasungsbereich (4) ein Fliehkraftabscheider (29) zur Abscheidung der Flugkohle vorgesehen ist.

22. Vorrichtung nach einem der Ansprüche 8 bis 20, dadurch gekennzeichnet, daß die dritte Vergasungsstufe (2) für die Gasumsetzung am glühenden Koksbett einen drehbaren Treppenrost (44) zur gleichmäßigen Verteilung aufweist, auf dem das glühende Kohlebett aufliegt.

23. Vorrichtung nach Anspruch 21, dadurch gekennzeichnet, daß der Treppenrost (44) in einen von außen angetriebenen Mantel (46) mit relativ großem Durchmesser übergeht, wobei im Inneren des Mantels (46) ein Gas-Luft-Wärmetauscher (50) für die Vorerwärmung der Vergasungsluft angeordnet ist.

24. Vorrichtung nach Anspruch 21 oder 22, dadurch gekennzeichnet, daß der Mantel (46) des Treppenrostes (44) im oberen Bereich einen Ringkanal für den Eintritt des Gases aus der zweiten Vergasungsstufe aufweist, wobei der Außenmantel des Ringkanals mit dem Treppenrost über Stegbleche starr verbunden ist und an dem Außenmantel Mitnehmer befestigt sind, die den Koks über den gesamten Reaktor verteilen.

## Claims

1. Process for the production of generator gas and activated carbon from solid fuels, in which in a first vapourising stage fuel is delivered by way of bottom loading and pre-heated air in the same stream as that of fuel and air, and whereby in a second vapourising stage an intermediate vapourisation takes place with the delivery of secondary air, and subsequently in a third vapourising stage the gas is enclosed with hot coke or charcoal respectively, whereby the heat of the released gas is used to heat the air, **characterised in that** the fuel, which enters centrally into the first vapourising stage, is ducted from the inside to the outside and then upwards, in that part of the entering fuel is pre-burnt in an antechamber, which is connected to the supply duct of the pre-heated air, so as to reduce the oxygen content of the pre-heated air, in that the gas in the intermediate vapourisation with mixed-in air is ducted through a venturi nozzle with diffusor, and in that the airborne carbon, which is pulled along from the first vapourising stage, is at least partially returned into the mouth of the venturi nozzle, in which respect the return is assisted both by sub-pressure in the venturi nozzle and mechanically.

2. Process according to claim 1, **characterised in that** the fuel supply is controlled continuously and in dependence on the gas flow and/or the level of the fuel bed in the first vapourising stage and/or the exit temperature of the gas from the first vapourising stage and/or the calorific value of the mixture of the gas in the intermediate vapourisation.

3. Process according to claim 1 or 2, **characterised in that** the distribution of the fuel is by way of rotation of the bottom of the first vapourising stage, and in that the revolutions of the bottom are dependent on the fuel grain and the fuel supply in such a manner, that up to approximately 15% of the fuel is ducted into the antechamber.

4. Process according to one of the claims 1 to 3, **characterised in that** the release of airborne carbon from the first vapourising stage is controlled.

5. Process according to one of the claims 1 to 4, **characterised in that** the second vapourising stage, which is the intermediate vapourising area, is supplied pre-heated air, in which respect the air quantity is dependent on the temperature in the diffusor of the intermediate vapourisation.

6. Process according to one of the claims 1 to 5, **characterised in that** the quantity of airborne carbon and the staying period of the airborne carbon in the intermediate vapourisation is controlled by a return of separated airborne carbon and/or separate supply of fine coke.

7. Process according to one of the claims 1 to 6, **characterised in that** the vapourisation air for the first and second vapourising stage is heated by utilising the waste heat of gases behind the third vapourising stage, and the quantity of pre-heated vapourisation air is controlled in such a manner that the air pressure in the chamber of the first vapourising stage is equal that of ambient air.

8. Process according to one of the claims 1 to 7, **characterised in that** the airborne carbon, after having been returned several times into the burner zone of the intermediate vapourisation, is released via a conveying means and a gate as activated coal.

9. Reactor apparatus for the production of generator gas and activated carbon of solid fuels with three vapourising stages, whereby bottom loading for rotation-symmetrical supply of the fuel into the bottom of the first vapourising stage and an air supply are provided, **characterised in that** the bottom of the first vapourising stage (3) is a rotary bottom (9), and that the second vapourising stage, which is the intermediate vapourising region (4), has a venturi nozzLe (27) with diffusor (29) and a rotary slide (32) for returning at least a part of the airborne carbon into the mouth of the venturi nozzLe (27).

10. Apparatus according to claim 8, **characterised in that** the first vapourising stage (3) and the second vapourising stage (4) are arranged on top of each other, and in that the third vapourising stage is arranged to be a separate reactor (2).

11. Apparatus according to claim 8 or 9, **characterised in that** the first vapourising stage (3) is limited by a vessel, which is open at the top and the bottom and which is inserted into a reactor (1), and in that an air gap (15) is provided between the bottom end of the vessel (14) and the rotary floor (9).

12. Apparatus according to claim 10, **character-**

ised in that an antechamber (19) for burning a small part of the delivered fuel is provided between the vessel (14) and the reactor wall in the area of the air duct (58).

13. Apparatus according to one of the claims 8 to 11, **characterised in that** guide plates are arranged on the rotary bottom (9), which plates duct the fuel in dependence on the revolutions initially to the outside, and then towards the top.

14. Apparatus according to claim 11 or 12, **characterised in that** the antechamber (19) is divided into sectors by guide plates, in which respect the guide plates rotate along with the rotation of the rotary bottom (9).

15. Apparatus according to one of the claims 8 to 13, **characterised in that** an agitator with agitator blades (21) is provided to convey and distribute fuel.

16. Apparatus according to one of the claims 8 to 14, **characterised in that** the first vapourising stage (3) is provided with an axially displaceable, rotatingly mounted level rotor (23), which is floatingly arranged on the fuel bed.

17. Apparatus according to claim 13, **characterised in that** the load-level rotor (23) has guide plates with abutment angles to create an uplift during rotary movements on the fuel bed, which is axially displaceable in dependence on the load level.

18. Apparatus according to claim 15 or 16, **characterised in that** the control of the airborne carbon release from the first vapourising stage (3) is dependent on the rotary speed of the load-level rotor (23).

19. Apparatus according to claim 8, **characterised in that** the rotary slide (32) is arranged in the second vapourising stage at the bottom at the height of the mouth of the venturi nozzle (27).

20. Apparatus according to claim 18, **characterised in that** the rotary slide (32) has rearward bent guide plates, guiding the airborne carbon inwards in the one rotary direction, and outwards to a pick-up means in the opposite rotary direction.

21. Apparatus according to one of the claims 8 to 19, **characterised in that** a centrifugal separator (29) for the separation of airborne carbon is provided ahead of the gas outlet (31, 30) in the intermediate vapourising area (4).

22. Apparatus according to one of the claims 8 to 20, **characterised in that** the third vapourising stage (2) for the gas conversion at the hot coke bed has a rotary step grate (44) for even distribution, onto which lies the hot coal bed.

23. Apparatus according to claim 21, **characterised in that** the step grate (44) terminates in an externally driven casing (46) of relatively large diameter, in which respect a gas-air-heat exchanger (50) for preheating the vapourisation air is provided inside the casing (46).

24. Apparatus according to claim 21 or 22, **characterised in that** the casing (46) of the step grate (44) has in its upper region an annular channel for the entry of gas from the second vapourising stage, whereby the exterior casing of the annular channel is rigidly connected to the step grate via webbing sheets, and pick-up means are arranged at the exterior casing, which distribute the coke over the entire reactor.

## Revendications

1. Procédé pour la production de gaz de gazogène et de charbon actif à partir de combustible solide dans lequel du combustible et de l'air sont amenés en débit continu dans un premier étage de gazéification le combustible étant alimenté par le bas et l'air étant préchauffé et au cours duquel se produit une gazéification intermédiaire dans un deuxième étage de gazéification en amenant de l'air secondaire et dans lequel le gaz est transformé dans un troisième étage de gazéification avec du coke ou bien du charbon de bois incandescent, la chaleur du gaz sortant étant utilisée pour réchauffer l'air, caractérisé en ce que le combustible pénétrant au milieu du premier étage de gazéification est conduit de l'intérieur vers l'extérieur et ensuite vers le haut, en ce qu'une partie du combustible à introduire est utilisée pour une précombustion dans une chambre qui se trouve en communication avec l'arrivée de l'air préchauffé en vue de la réduction de la teneur en oxygène de cet air préchauffé, en ce que le gaz est conduit avec l'air mélangé avec lui à travers une buse en venturi avec diffuseur dans la gazéification intermédiaire et en ce que le charbon pulvérulent entraîné à partir du premier étage de gazéification est ramené au moins partiellement dans la gorge de la buse en venturi, ce retour étant favorisé aussi bien par une dépression dans ladite buse en venturi que par une action mécanique.

2. Procédé suivant la revendication 1, caractérisé en ce que l'alimentation en combustible est réglée constamment et en dépendance du débit de gaz et/ou du niveau de remplissage du lit de combustible dans le premier étage de gazéification et/ou de la température de sortie du gaz du premier étage de gazéification et/ou du pouvoir calorifique du mélange de gaz dans la gazéification intermédiaire.

3. Procédé suivant l'une quelconque des revendications 1 ou 2, caractérisé en ce que la répartition du combustible est effectuée par rotation de la sole du premier étage de la gazéification et en ce que la vitesse de rotation de ladite sole est réglée en fonction de la granulométrie du combustible utilisé et de l'alimentation en combustible de telle façon que jusqu'à 15% environ dudit combustible est dirigé dans la chambre de pré-combustion.

4. Procédé suivant l'une quelconque des revendications 1 à 3, caractérisé en ce que le débit de charbon pulvérulent sortant du premier étage de gazéification est réglé.

5. Procédé suivant l'une quelconque des revendications 1 à 4, caractérisé en ce que de l'air préchauffé est amené au deuxième étage de gazéification formant la zone de gazéification intermédiaire, le débit l'air étant réglé en fonction de la température dans le diffuseur de ladite zone de gazéification intermédiaire.

6. Procédé suivant l'une quelconque des revendications 1 à 5, caractérisé en ce que le débit de charbon pulvérulent et le temps de séjour de ce charbon pulvérulent dans la zone de gazéification intermédiaire est réglé par un retour en arrière d'une partie du charbon pulvérulent obtenu par séparation et/ou adjonction séparée de fine de charbon.

7. Procédé suivant l'une quelconque des revendications 1 à 6, caractérisé en ce que l'air de la gazéification pour le premier et le deuxième étage de gazéification est préchauffé en utilisant la chaleur sortant du gaz après le troisième étage de gazéification et en ce que le débit dudit air préchauffé de gazéification est réglé de telle façon que celui-ci soit à la même pression que l'air extérieur dans la chambre du premier étage de gazéification.

8. Procédé suivant l'une quelconque des revendications 1 à 7, caractérisé en ce que le charbon pulvérulent est évacué sous forme de charbon actif par un dispositif d'avance et de vanne après avoir subit de multiples retours dans la zone de combustion de la gazéification intermédiaire.

9. Appareil pour la production de gaz de gazogène et de charbon actif à partir de combustible solide, comportant trois étages de gazéification, une alimentation par le bas en vue du chargement symétrique en rotation du combustible sur la sole du premier étage de gazéification et une alimentation en air, caractérisé en ce que la sole du premier étage de gazéification (3) est réalisé sous la forme d'une sole tournante (9) et en ce que le deuxième étage de gazéification formant la zone de gazéification intermédiaire (4) présente une buse (27) en forme de venturi avec un diffuseur (29) ainsi qu'un tiroir rotatif (32) pour ramener en arrière au moins une partie du charbon pulvérulent dans la gorge de la buse.

10. Appareil suivant la revendication 9, caractérisé en ce que le premier étage de gazéification (3) et le deuxième étage de gazéification (4) sont disposés l'un au-dessus de l'autre et en ce que le troisième étage de gazéification est réalisé sous la forme d'un réacteur séparé (2).

11. Appareil suivant l'une quelconque des revendications 9 ou 10, caractérisé en ce que le premier étage de gazéification (3) est limité par un récipient (14) ouvert en haut et en bas qui est disposé dans un réacteur (1) et en ce qu'entre le bord intérieur du récipient (14) et la sole tournante (9), il est prévu un interstice (15).

12. Appareil suivant la revendication 11, caractérisé en ce qu'entre le récipient (14) et la paroi du réacteur est prévue dans la zone de l'arrivée d'air (58) une chambre (19) de pré-combustion pour la combustion d'une petite partie du combustible introduit.

13. Appareil suivant l'une quelconque des revendications 9 à 12, caractérisé en ce que des pâles de guidage sont disposées sur la sole tournante (9) pour diriger le combustible d'abord vers l'extérieur et ensuite vers le haut, indépendamment de la vitesse de rotation.

14. Appareil suivant l'une quelconque des revendications 12 ou 13, caractérisé en ce que la chambre (19) de pré-combustion est divisée en secteurs par des tôles de guidage qui sont solidaires en rotation de la sole tournante (9).

15. Appareil suivant l'une quelconque des revendications 9 à 14, caractérisé en ce qu'un dispositif mélangeur avec des pâles mélangeuses (21) pour faire avancer et répartir le combustible est prévu à l'intérieur du premier étage de gazéification (3).

16. Appareil suivant l'une quelconque des revendications 9 à 15, caractérisé en ce que le premier étage de gazéification (3) est pourvu d'un rotor détecteur de niveau 23 déplaçable axialement, disposé librement sur le lit du combustible et pouvant être entraîné en rotation.

17. Appareil suivant la revendication 16, caractérisé en ce que le rotor détecteur de niveau (23) présente des tôles de guidage ayant des angles d'incidence pour obtenir une poussée vers le haut pour des mouvements de rotation sur le lit de combustible et peut se déplacer axialement en fonction de l'état de remplissage.

18. Appareil suivant l'une quelconque des revendications 16 ou 17, caractérisé en ce que le réglage de la sortie du combustible pulvérulent du premier étage de gazéification (3) se fait en fonction de la vitesse de rotation du rotor détecteur de niveau (23).

19. Appareil selon la revendication 9, caractérisé en ce que le tiroir rotatif (32) est disposé dans le deuxième étage de gazéification sur la sole au niveau de la gorge de la buse en forme de venturi (27).

20. Appareil suivant la revendication 19, caractérisé en ce que le tiroir rotatif (32), présente des tôles de guidage courbées vers l'arrière qui amènent le charbon pulvérulent vers l'intérieur pour l'un des sens de rotation et vers l'extérieur vers un dispositif d'évacuation pour l'autre sens de rotation.

21. Appareil suivant l'une quelconque des revendications 9 à 10, caractérisé en ce qu'un séparateur centrifuge (29) pour séparer le charbon pulvérulent est prévu dans la zone de gazéification intermédiaire (4) devant la sortie des gaz (31, 30).

22. Appareil suivant l'une quelconque des revendications 9 à 21, caractérisé en ce que le troisième étage de gazéification (2), présente pour la transfor-

17      EP 0 309 387 B1      18

mation du gaz sur le lit de coke incandescent une grille tournante (44) en escalier pour la répartition uniforme sur laquelle repose le lit de charbon incandescent.

23. Appareil suivant la revendication 22, caractérisé en ce que la grille (44) en escalier se termine par un manteau (46) entraîné vers l'extérieur ayant un diamètre relativement grand, un échangeur de chaleur (50) gaz-air pour le préchauffage de l'air de gazéification étant disposé à l'intérieur dudit manteau (46).

24. Appareil suivant l'une quelconque des revendications 22 ou 23, caractérisé en ce que le manteau (46) de la grille (44) en escalier présente dans sa partie supérieure un canal annulaire pour l'entrée du gaz provenant du deuxième étage de gazéification, la paroi extérieure dudit canal annulaire étant rigidement reliée avec la grille en escalier par des tôles entretoises, des tôles d'entraînement étant fixées sur cette paroi extérieure pour répartir le coke dans l'ensemble du réacteur.

10

FIG.1

EP 0 309 387 B1

FIG. 2

FIG.3

FIG.4

FIG. 5